(19) **Europäisches Patentamt / European Patent Office / Office européen des brevets**

(11) **EP 4 257 354 A1**

(12) **EUROPEAN PATENT APPLICATION**
published in accordance with Art. 153(4) EPC

(43) Date of publication:
11.10.2023 Bulletin 2023/41

(21) Application number: 21900579.0

(22) Date of filing: 30.11.2021

(51) International Patent Classification (IPC):
*B32B 27/00* (2006.01)       *B32B 27/18* (2006.01)
*C09J 5/06* (2006.01)        *C09J 11/04* (2006.01)
*C09J 201/00* (2006.01)      *C09J 7/10* (2018.01)
*C09J 7/30* (2018.01)        *C09J 7/35* (2018.01)
*H05B 6/54* (2006.01)        *B32B 7/027* (2019.01)

(52) Cooperative Patent Classification (CPC):
**B32B 7/027; B32B 27/00; B32B 27/18; C09J 5/06;
C09J 7/10; C09J 7/30; C09J 7/35; C09J 11/04;
C09J 201/00; H05B 6/54**

(86) International application number:
**PCT/JP2021/043772**

(87) International publication number:
**WO 2022/118826 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  04.12.2020  JP 2020202036
31.03.2021  JP 2021061708

(71) Applicant: LINTEC CORPORATION
Itabashi-ku
Tokyo 173-0001 (JP)

(72) Inventors:
• **TSUCHIBUCHI, Koji**
**Tokyo 173-0001 (JP)**
• **TAYA, Naoki**
**Tokyo 173-0001 (JP)**

(74) Representative: **Gille Hrabal**
**Partnerschaftsgesellschaft mbB**
**Patentanwälte**
**Brucknerstraße 20**
**40593 Düsseldorf (DE)**

(54) **ADHESIVE FOR HIGH-FREQUENCY DIELECTRIC HEATING, STRUCTURE, AND METHOD FOR MANUFACTURING STRUCTURE**

(57)     A high-frequency-dielectric-heating adhesive (11, 12) configured to bond three or more adherends (110, 120, 130) is provided. The high-frequency-dielectric-heating adhesive (11, 12) contains a thermoplastic resin and a dielectric filler configured to generate heat upon application of a high-frequency electric field. MVR of the high-frequency-dielectric-heating adhesive (11, 12) in a range from a lower-limit temperature TL to an upper-limit temperature TU is in a range from 1 to 300 $cm^3$/10 min, where the lower-limit temperature TL (unit: degrees C) is defined by a numerical formula (Numerical Formula 11) below and the upper-limit temperature TU (unit: degrees C) is defined by a numerical formula (Numerical Formula 12) below,

$$TL = (\text{softening temperature TM of the high-frequency-dielectric-heating adhesive}) + 10 \text{ degrees C} \quad \ldots (\text{Numerical Formula 11})$$

$$TU = (\text{thermal decomposition temperature TD of the high-frequency-dielectric-heating adhesive}) - 10 \text{ degrees C} \ldots (\text{Numerical Formula 12}).$$

**(Cont. next page)**

# FIG.1

**Description**

TECHNICAL FIELD

The present invention relates to a high-frequency-dielectric-heating adhesive, an assembly, and a manufacturing method of the assembly.

BACKGROUND ART

In order to bond a plurality of adherends to produce a laminate, it has been proposed, for instance, to perform dielectric heating, induction heating, ultrasonic welding, or laser welding, with an adhesive being interposed between the adherends.

As an example, Patent Literature 1 discloses a composite glass (laminate) provided by laminating top and bottom layers (glass plates) and intermediate layers (a plurality of plastic sheets) with an ethylene-vinyl acetate copolymer resin sheet (EVA sheet) interposed therebetween.

Another example is disclosed in Patent Literature 2, where a motor core material in a form of fifty electromagnetic steel plates laminated via adhesive insulation films is pressed with a use of a press cylinder of a high-frequency dielectric heating device and, simultaneously, applied with high frequency waves between electrodes to produce a laminated iron core (laminate). A main component of the adhesive insulation film is an organic resin (e.g. an epoxy resin).

CITATION LIST

PATENT LITERATURE(S)

>    Patent Literature 1 JP 2003-252658 A
>    Patent Literature 2: JP 11-187626 A

SUMMARY OF THE INVENTION

PROBLEM(S) TO BE SOLVED BY THE INVENTION

In the process for producing the composite glass disclosed in Patent Literature 1, the laminate of the glass plates, EVA sheets, and polycarbonate sheets is put into an oven vacuum chamber, which is heated from a room temperature to 130 degrees C and decompressed to 70 cmHg. In order to produce the composite glass (laminate) disclosed in Patent Literature 1, it is necessary to bond the glass plates and the polycarbonate sheets after raising the temperature and lowering the pressure in the vacuum chamber. Accordingly, it is difficult to bond these components (adherends) within a short time.

In Patent Literature 2, it is disclosed that an application time for the high-frequency waves in producing the laminated iron core (laminate) is two or four minutes, thus also failing to bond the steel plates (adherend) within a short time.

It should be noted that in the assembly produced by laminating the high-frequency-dielectric-heating adhesive and the three or more adherends and applying high-frequency dielectric heating to bond the adherends, the adherends are sometimes offset from each other in the assembly.

An object of the invention is to provide a high-frequency-dielectric-heating adhesive capable of, while bonding three or more adherends in a single process within a short time, restraining offset between the adherends, an assembly provided by bonding three or more adherends with the high-frequency-dielectric-heating adhesive, and a manufacturing method of the assembly.

MEANS FOR SOLVING THE PROBLEM(S)

According to an aspect of the invention, a high-frequency-dielectric-heating adhesive configured to bond three or more adherends is provided, where the high-frequency-dielectric-heating adhesive contains a thermoplastic resin and a dielectric filler configured to generate heat upon application of a high-frequency electric field, and a melt volume rate of the high-frequency-dielectric-heating adhesive at each of a lower-limit temperature TL and an upper-limit temperature TU is in a range from 1 to 300 $cm^3$/10 min, the lower-limit temperature TL (unit: degrees C) being defined by a numerical formula (Numerical Formula 11) below and the upper-limit temperature TU (unit: degrees C) being defined by a numerical formula (Numerical Formula 12) below.

$$TL = (\text{softening temperature TM of the high-frequency-dielectric-heating adhesive}) + 10 \text{ degrees C} \quad \ldots(\text{Numerical Formula 11})$$

$$TU = (\text{thermal decomposition temperature TD of the high-frequency-dielectric-heating adhesive}) - 10 \text{ degrees C} \quad \ldots(\text{Numerical Formula 12})$$

In the above, a measurement load in measuring the melt volume rate at the lower-limit temperature TL is 20 kg, and a measurement load in measuring the melt volume rate at the upper-limit temperature TU is 5 kg.

In the high-frequency-dielectric-heating adhesive according to the aspect of the invention, it is preferable that the three or more adherends each have a flow start temperature or no flow start temperature, a flow start temperature TF2 (degrees C) of each of the adherends and a flow start temperature TF1 (degrees C) of the high-frequency-dielectric-heating adhesive satisfy a relationship of a numerical formula (Numerical Formula 2) below.

$$-5 \leq TF2 - TF1 \quad \ldots(\text{Numerical Formula 2})$$

In the high-frequency-dielectric-heating adhesive according to the above aspect of the invention, it is preferable that the flow start temperature TF1 of the high-frequency-dielectric-heating adhesive is in a range from 80 degrees C to 200 degrees C.

In the high-frequency-dielectric-heating adhesive according to the above aspect of the invention, it is preferable that, when at least one of the three or more adherends is an adherend having the flow start temperature, the flow start temperature TF2 of the one of the three or more adherends having the flow start temperature is 90 degrees C or more.

In the high-frequency-dielectric-heating adhesive according to the above aspect of the invention, it is preferable that a dielectric property DP1 of the high-frequency-dielectric-heating adhesive and a dielectric property DP2 of each of the three or more adherends satisfy a relationship of a numerical formula (Numerical Formula 1) below,

$$0 < DP1 - DP2 \quad \ldots(\text{Numerical Formula 1})$$

where the dielectric property DP1 and the dielectric property DP2 are respectively values of dielectric properties ($\tan\delta/\varepsilon'r$) of the high-frequency-dielectric-heating adhesive and the three or more adherends,

$\tan\delta$ is a dielectric dissipation factor at 23 degrees C and at a frequency of 40.68 MHz, and
$\varepsilon'r$ is a relative permittivity at 23 degrees C and at a frequency of 40.68 MHz.

In the high-frequency-dielectric-heating adhesive according to the above aspect of the invention, it is preferable that the dielectric property DP2 of each of the three or more adherends is 0.015 or less.

In the high-frequency-dielectric-heating adhesive according to the above aspect of the invention, it is preferable that the dielectric property DP1 of the high-frequency-dielectric-heating adhesive is 0.005 or more.

In the high-frequency-dielectric-heating adhesive according to the above aspect of the invention, it is preferable that the high-frequency-dielectric-heating adhesive is in a form of an adhesive sheet.

In the high-frequency-dielectric-heating adhesive according to the above aspect of the invention, it is preferable that a thickness TS1 of the adhesive sheet and a thickness TS2 of each of the three or more adherends satisfy a relationship of a numerical formula (Numerical Formula 3) below,

$$TS1 < TS2 \quad \ldots(\text{Numerical Formula 3}).$$

In the high-frequency-dielectric-heating adhesive according to the above aspect of the invention, it is preferable that the thickness TS1 of the adhesive sheet is in a range from 5 $\mu$m to 2000 $\mu$m.

In the high-frequency-dielectric-heating adhesive according to the above aspect of the invention, it is preferable that a thickness accuracy of the adhesive sheet is within $\pm 10\%$.

According to another aspect of the invention, there is provided an assembly including the high-frequency-dielectric-heating adhesive according to the above-described aspect of the invention and the three or more adherends bonded by the high-frequency-dielectric-heating adhesive.

According to still another aspect of the invention, there is provided a manufacturing method of an assembly, the method including: placing the high-frequency-dielectric-heating adhesive according to the above-described aspect of the invention between corresponding ones of the three or more adherends; and applying a high-frequency electric field to the high-frequency-dielectric-heating adhesive to bond the three or more adherends.

In the manufacturing method of the assembly according to the present exemplary embodiment, it is preferable that the three or more adherends and the high-frequency-dielectric-heating adhesive are placed in between electrodes of a dielectric heating device, and the high-frequency electric field is applied while the three or more adherends and the high-frequency-dielectric-heating adhesive are pressed by the electrodes.

According to one of the aspects of the invention, the high-frequency-dielectric-heating adhesive capable of bonding the three or more adherends in a single process within a short time and capable of restraining offset between adherends can be provided. Further, according to other aspects of the invention, an assembly including three or more adherends bonded by the high-frequency-dielectric-heating adhesive and a manufacturing method of the assembly can be provided.

BRIEF DESCRIPTION OF DRAWINGS

Fig. 1 is a schematic cross-sectional view of an assembly according to an exemplary embodiment.

Fig. 2 is a schematic illustration for explaining a high-frequency dielectric heating process performed with a use of a high-frequency-dielectric-heating adhesive and a dielectric heating device according to the exemplary embodiment.

Fig. 3 is a schematic perspective view for explaining a production process of an assembly used in evaluation of adhesivity in Examples.

Fig. 4 is a schematic side elevational view for explaining a production process of an assembly used in evaluation of an offset of adherends in Examples.

Fig. 5 is a schematic side elevational view for explaining an evaluation process for evaluating the offset of the adherends in Examples.

DESCRIPTION OF EMBODIMENT(S)

High-Frequency-Dielectric-Heating Adhesive

A high-frequency-dielectric-heating adhesive according to the present exemplary embodiment contains a thermoplastic resin and a dielectric filler that generates heat upon application of a high-frequency electric field. The high-frequency electric field is an electric field whose direction is reversed at high frequency.

The thermoplastic resin and the dielectric filler contained in the high-frequency-dielectric-heating adhesive according to the present exemplary embodiment will be sometimes herein referred to as a thermoplastic resin (A) and a dielectric filler (B), respectively.

The high-frequency-dielectric-heating adhesive according to the present exemplary embodiment is a high-frequency-dielectric-heating adhesive for bonding three or more adherends. A melt volume rate of the high-frequency-dielectric-heating adhesive at each of a lower-limit temperature TL and an upper-limit temperature TU is in a range from 1 to 300 $cm^3$/10 min. Herein, the lower-limit temperature TL (unit: degrees C) and the upper-limit temperature TU (unit: degrees C) are respectively defined by numerical formulae (Numerical Formula 11 and Numerical Formula 12) below.

$$TL = \text{(softening temperature TM of the high-frequency-dielectric-heating adhesive)} + 10 \text{ degrees C} \quad \text{…(Numerical Formula 11)}$$

$$TU = \text{(thermal decomposition temperature TD of the high-frequency-dielectric-heating adhesive)} - 10 \text{ degrees C} \quad \text{…(Numerical Formula 12)}$$

In the above, a measurement load in measuring the melt volume rate at the lower-limit temperature TL is 20 kg, and
a measurement load in measuring the melt volume rate at the upper-limit temperature TU is 5 kg.

Melt Volume Rate (MVR)

Values of the melt volume rate (sometimes abbreviated as MVR hereinafter) of the high-frequency-dielectric-heating adhesive according to the present exemplary embodiment, which are respectively measured at the softening temperature TM + 10 degrees C and the thermal decomposition temperature TD -10 degrees C, are each in the range from 1 to 300 cm$^3$/10 min. It is supposed that the softening temperature TM + 10 degrees C represents a temperature at which the high-frequency-dielectric-heating adhesive starts melting to exhibit bondability with the adherend. The thermal decomposition temperature TD - 10 degrees C represents a temperature at which thermal decomposition of the thermoplastic resin in the high-frequency-dielectric-heating adhesive does not start and the bondability with the adherend is not likely to be affected by the thermal decomposition of the high-frequency-dielectric-heating adhesive. In other words, these temperatures respectively represent a temperature for the bondability of the high-frequency-dielectric-heating adhesive with the adherend to be reliably exhibited and a temperature for the bonding strength of the high-frequency-dielectric-heating adhesive with the adherend to be unlikely to be degraded. Herein, the term "min" in the units is an abbreviation for "minute."

When MVR of the high-frequency-dielectric-heating adhesive according to the present exemplary embodiment is less than 1 cm$^3$/10 min at each of the above measurement temperatures, the high-frequency-dielectric-heating adhesive has an excessively low fluidity and, therefore, it is difficult to exhibit an anchoring effect and to achieve properties such as wettability with respect to the adherend. Specifically, it is supposed that, even when the high-frequency-dielectric-heating adhesive is subjected to a high-frequency electric field, the excessively low MVR of the high-frequency-dielectric-heating adhesive makes it difficult to wet-spread the high-frequency-dielectric-heating adhesive on the surface of the adherend. Accordingly, a certain time for wet-spreading the high-frequency-dielectric-heating adhesive on the surface of the adherend is required. In addition, the anchoring effect is not likely to be exhibited. Accordingly, when the MVR of the high-frequency-dielectric-heating adhesive according to the present exemplary embodiment is less than 1 cm$^3$/10 min, a certain bonding time is required, so that it is difficult to bond the adherends within a short time and the bonding strength tends to become weak.

When the MVR of the high-frequency-dielectric-heating adhesive according to the present exemplary embodiment exceeds 300 cm$^3$/10 min at each of the above measurement temperatures, the fluidity of the high-frequency-dielectric-heating adhesive becomes excessively high, so that the adherends are easily offset with each other when three or more adherends are bonded in a single process.

The MVR of the high-frequency-dielectric-heating adhesive according to the present exemplary embodiment at each of the softening temperature TM + 10 degrees C and the thermal decomposition temperature TD - 10 degrees C is preferably 2 cm$^3$/10 min or more, more preferably 3 cm$^3$/10 min or more, and still more preferably 4 cm$^3$/10 min or more.

The MVR of the high-frequency-dielectric-heating adhesive according to the present exemplary embodiment at each of the softening temperature TM + 10 degrees C and the thermal decomposition temperature TD - 10 degrees C is preferably 275 cm$^3$/10 min or less, more preferably 250 cm$^3$/10 min or less, still more preferably 225 cm$^3$/10 min or less, still further more preferably 200 cm$^3$/10 min or less, yet still further more preferably 150 cm$^3$/10 min or less, even still further more preferably 100 cm$^3$/10 min or less, yet even still further more preferably 50 cm$^3$/10 min or less, yet further even still further more preferably 20 cm$^3$/10 min or less, and particularly preferably 10 cm$^3$/10 min or less.

With the MVR of the high-frequency-dielectric-heating adhesive according to the present exemplary embodiment being 2 cm$^3$/10 min or more, three or more adherends can be bonded in a single process within the shorter time and the more sufficient bonding strength is likely to be achieved.

With the MVR of the high-frequency-dielectric-heating adhesive according to the present exemplary embodiment being 275 cm$^3$/10 min or less, the offset between the adherends is more likely to be restrained.

Herein, the MVR (cm$^3$/10 min) of the high-frequency-dielectric-heating adhesive according to the present exemplary embodiment is a value measured with a use of a flow tester. The MVR of the high-frequency-dielectric-heating adhesive can be specifically measured according to a method described in a corresponding item of later-described Examples below.

Softening Temperature

The softening temperature TM of the high-frequency-dielectric-heating adhesive according to the present exemplary embodiment is preferably 70 degrees C or more, more preferably 80 degrees C or more, and still more preferably 90 degrees C or more.

The softening temperature TM of the high-frequency-dielectric-heating adhesive according to the present exemplary embodiment is preferably 200 degrees C or less, more preferably 180 degrees C or less, and still more preferably 160 degrees C or less.

With the softening temperature TM of the high-frequency-dielectric-heating adhesive being 70 degrees C or more (preferably 80 degrees C or more), the offset between the adherends is more likely to be restrained. In addition, the assembly manufactured with the use of the high-frequency-dielectric-heating adhesive is likely to exhibit heat resistance for daily use.

With the softening temperature TM of the high-frequency-dielectric-heating adhesive being 200 degrees C or less, the time for melting the high-frequency-dielectric-heating adhesive in bonding can be easily kept from being lengthened and a bonding strength between the high-frequency-dielectric-heating adhesive and the adherends is also likely to be ensured.

The softening temperature can be measured according to a method described in a corresponding item of later-described Examples below.

Thermal Decomposition Temperature

The thermal decomposition temperature TD of the high-frequency-dielectric-heating adhesive according to the present exemplary embodiment is preferably 180 degrees C or more, more preferably 200 degrees C or more, and still more preferably 220 degrees C or more.

With the thermal decomposition temperature TD of the high-frequency-dielectric-heating adhesive being 180 degrees C or more, the assembly produced with the use of the high-frequency-dielectric-heating adhesive is likely to exhibit heat resistance for daily use. In addition, sufficient output can be applied at the time of applying the high-frequency electric field, so that the high-frequency-dielectric-heating adhesive and the adherends are more likely to be bonded within a short time.

The upper limit of the thermal decomposition temperature TD of the high-frequency-dielectric-heating adhesive according to the present exemplary embodiment, which is not particularly limited, is, for instance, optionally 600 degrees C or less, alternatively 500 degrees C or less, or further alternatively 400 degrees C or less.

The thermal decomposition temperature can be measured in accordance with JIS K 7120: 1987. The thermal decomposition temperature of the high-frequency-dielectric-heating adhesive according to the present exemplary embodiment is, for instance, a temperature corresponding to a peak top of a heat-generation peak observed at a low-temperature side of a DTA curve. Specifically, the thermal decomposition temperature can be measured according to a method described in a corresponding item of later-described Examples below.

Flow Start Temperature

The flow start temperature TF1 of the high-frequency-dielectric-heating adhesive according to the present exemplary embodiment is preferably 80 degrees C or more, more preferably 90 degrees C or more, and still more preferably 100 degrees C or more.

The flow start temperature TF1 of the high-frequency-dielectric-heating adhesive according to the present exemplary embodiment is preferably 200 degrees C or less, more preferably 180 degrees C or less, still more preferably 160 degrees C or less, and still further more preferably 140 degrees C or less.

With the flow start temperature TF1 of the high-frequency-dielectric-heating adhesive being 80 degrees C or more, the offset between the adherends is more likely to be restrained. In addition, the assembly manufactured with the use of the high-frequency-dielectric-heating adhesive is likely to exhibit heat resistance for daily use.

With the flow start temperature TF1 of the high-frequency-dielectric-heating adhesive being 200 degrees C or less, the time for melting the high-frequency-dielectric-heating adhesive in bonding can be easily kept from being lengthened and a bonding strength between the high-frequency-dielectric-heating adhesive and the adherends is likely to be ensured.

The flow start temperature can be measured according to a method described in a corresponding item of later-described Examples below.

Relationship between Flow Start Temperature TF1 and Flow Start Temperature TF2 of Adherends

The relationship between the flow start temperature TF1 of the high-frequency-dielectric-heating adhesive and the flow start temperature TF2 of the adherends will be described below.

When all of the three or more adherends have the flow start temperature, it is preferable that the flow start temperature of each of the adherends and the flow start temperature of the high-frequency-dielectric-heating adhesive satisfy the relationship of the numerical formula (Numerical Formula 2). For instance, when three adherends, all of which have the flow start temperature, are to be bonded, it is preferable that the flow start temperature of each of the three adherends satisfies the relationship of the numerical formula (Numerical Formula 2). For instance, supposing that the flow start temperatures TF2 of the three adherends are mutually different values (TF2A (degrees C), TF2B (degrees C), and TF2C (degrees C)), it is preferable that the flow start temperatures satisfy relationships of numerical formulae (Numerical Formula 2A, Numerical Formula 2B, and Numerical Formula 2C) below, respectively.

$$-5 \leq TF2A - TF1 \quad \ldots (\text{Numerical Formula 2A})$$

$$-5 \leq TF2B - TF1 \quad \ldots (\text{Numerical Formula 2B})$$

$$-5 \leq TF2C - TF1 \quad \ldots (\text{Numerical Formula 2C})$$

When at least one of the three or more adherends has no flow start temperature, it is not necessary for the high-frequency-dielectric-heating adhesive to satisfy the relationship of the numerical formula (Numerical Formula 2) with respect to the adherend(s) having no flow start temperature.

A difference (TF2 - TF1) between the flow start temperature TF2 (degrees C) of the adherends and the flow start temperature TF1 (degrees C) of the high-frequency-dielectric-heating adhesive more preferably satisfies a relationship of a numerical formula (Numerical Formula 2-1) below, still more preferably a relationship of a numerical formula (Numerical Formula 2-2) below, still further more preferably a relationship of a numerical formula (Numerical Formula 2-3) below, yet still further more preferably a relationship of a numerical formula (Numerical Formula 2-4) below, even still further more preferably a relationship of a numerical formula (Numerical Formula 2-5) below, yet even still further more preferably a relationship of a numerical formula (Numerical Formula 2-6) below, and yet further even still further more preferably a relationship of a numerical formula (Numerical Formula 2-7) below.

$$0 \leq TF2 - TF1 \quad \ldots (\text{Numerical Formula 2-1})$$

$$5 \leq TF2 - TF1 \quad \ldots (\text{Numerical Formula 2-2})$$

$$10 \leq TF2 - TF1 \quad \ldots (\text{Numerical Formula 2-3})$$

$$15 \leq TF2 - TF1 \quad \ldots (\text{Numerical Formula 2-4})$$

$$20 \leq TF2 - TF1 \quad \ldots (\text{Numerical Formula 2-5})$$

$$30 \leq TF2 - TF1 \quad \ldots (\text{Numerical Formula 2-6})$$

$$40 \leq TF2 - TF1 \quad \ldots (\text{Numerical Formula 2-7})$$

The difference (TF2 - TF1) between the flow start temperature TF2 (degrees C) of the adherends and the flow start temperature TF1 (degrees C) of the high-frequency-dielectric-heating adhesive preferably satisfies a relationship of a numerical formula (Numerical Formula 2-8) below, more preferably a relationship of a numerical formula (Numerical Formula 2-9) below, still more preferably a relationship of a numerical formula (Numerical Formula 2-10) below, and still further more preferably a relationship of a numerical formula (Numerical Formula 2-11) below.

$$TF2 - TF1 \leq 1100 \quad \ldots (\text{Numerical Formula 2-8})$$

$$TF2 - TF1 \leq 300 \quad \ldots (\text{Numerical Formula 2-9})$$

$$TF2 - TF1 \leq 200 \quad \ldots (\text{Numerical Formula 2-10})$$

$$TF2 - TF1 \leq 100 \qquad \dots \text{(Numerical Formula 2-11)}$$

When at least one of the three or more adherends has the flow start temperature, the flow start temperature TF2 of the at least one of the adherends is preferably 90 degrees C or more, more preferably 100 degrees C or more, still more preferably 110 degrees C or more, still further more preferably 120 degrees C or more, and yet still further more preferably 130 degrees C or more.

The flow start temperature TF2 of the at least one of the adherends having the flow start temperature is preferably 1200 degrees C or less, more preferably 400 degrees C or less.

When the adherends are made of, for instance, a ceramic or a curable resin, the flow start temperature TF2 of the at least one of the adherends has no upper limit.

With the flow start temperature TF2 of the at least one of the adherends being 90 degrees C or more, the adherends can be easily bonded without impairing the shape thereof during the bonding process.

Dielectric Property

The relationship between the dielectric property DP1 of the high-frequency-dielectric-heating adhesive and the dielectric property DP2 of the adherends will be described below. When, for instance, three adherends are to be bonded with the use of the high-frequency-dielectric-heating adhesive, it is preferable that the dielectric property DP1 of the high-frequency-dielectric-heating adhesive satisfies the relationship of the numerical formula (Numerical Formula 1) with respect to the dielectric property DP2 of each of the three adherends.

$$0 < DP1 - DP2 \qquad \dots \text{(Numerical Formula 1)}$$

In the above, the dielectric property DP1 and the dielectric property DP2 are values of the dielectric property ($\tan\delta/\varepsilon$'r) of the high-frequency-dielectric-heating adhesive and the three or more adherends, respectively. $\tan\delta$ and $\varepsilon$'r are a dielectric dissipation factor and a relative permittivity, respectively, at 23 degrees C and at a frequency of 40.68 MHz.

Additionally, when, for instance, the dielectric properties DP2 of the three adherends are mutually different (DP2A, DP2B, and DP2C), it is preferable that the high-frequency-dielectric-heating adhesive satisfies relationships of formulae (Numerical Formula 1A), (Numerical Formula 1B), and (Numerical Formula 1C) below.

$$0 < DP1 - DP2A \qquad \dots \text{(Numerical Formula 1A)}$$

$$0 < DP1 - DP2B \qquad \dots \text{(Numerical Formula 1B)}$$

$$0 < DP1 - DP2C \qquad \dots \text{(Numerical Formula 1C)}$$

A difference (DP1 - DP2) between the dielectric property DP1 of the high-frequency-dielectric-heating adhesive and the dielectric property DP2 of each of the adherends preferably satisfies a relationship of a numerical formula (Numerical Formula 1-1) below, more preferably a relationship of a numerical formula (Numerical Formula 1-2) below.

$$0.005 \leq DP1 - DP2 \qquad \dots \text{(Numerical Formula 1-1)}$$

$$0.01 \leq DP1 - DP2 \qquad \dots \text{(Numerical Formula 1-2)}$$

Usually, the difference (DP1 - DP2) between the dielectric property DP1 of the high-frequency-dielectric-heating adhesive and the dielectric property DP2 of the adherends preferably satisfies a relationship of a numerical formula (Numerical Formula 1-3) below, more preferably a relationship of a numerical formula (Numerical Formula 1-4) below.

$$DP1 - DP2 \leq 0.1 \qquad \dots \text{(Numerical Formula 1-3)}$$

$$DP1 - DP2 \leq 0.05 \quad \ldots (\text{Numerical Formula 1-4})$$

The dielectric property DP1 of the high-frequency-dielectric-heating adhesive according to the present exemplary embodiment is preferably 0.005 or more, more preferably 0.008 or more, and still more preferably 0.01 or more.

The dielectric property DP1 of the high-frequency-dielectric-heating adhesive according to the present exemplary embodiment is preferably 0.1 or less, more preferably 0.08 or less, still more preferably 0.05 or less, and particularly preferably 0.03 or less.

The high-frequency-dielectric-heating adhesive, whose dielectric property DP1 is 0.005 or more, can prevent occurrence of failure in generating desired heat when applied with dielectric heating, and consequent difficulty in firmly bonding the high-frequency-dielectric-heating adhesive and the adherends.

The high-frequency-dielectric-heating adhesive, whose dielectric property DP1 is 0.1 or less, is likely to be kept from being overheated and thus is unlikely to cause damage on a part of the adherends in contact with the high-frequency-dielectric-heating adhesive.

The dielectric property DP2 of each of the three or more adherends according to the present exemplary embodiment is preferably 0.015 or less, more preferably 0.01 or less, and still more preferably 0.005 or less.

With the dielectric property DP2 of the adherends being 0.015 or less, the heat generated by the adherends can be restrained, thus easily bonding the adherends without impairing the shape of the adherends in bonding.

Usually, the dielectric property DP2 of the adherends is 0 or more.

The dielectric property ($\tan\delta/\varepsilon$'r) is a value obtained by dividing a dielectric dissipation factor ($\tan\delta$) by a relative permittivity ($\varepsilon$'r), the dielectric dissipation factor and the relative permittivity being measured using an impedance material analyzer or the like.

The dielectric dissipation factor ($\tan\delta$) and the relative permittivity ($\varepsilon$'r) for the dielectric properties of the high-frequency-dielectric-heating adhesive and the adherends can be easily and accurately measured using an impedance material analyzer.

It should be noted that the details of the measurement method for the dielectric properties of the high-frequency-dielectric-heating adhesive and the adherends are as follows. Initially, measurement sheets of the high-frequency-dielectric-heating adhesive and the adherends are prepared. If it is necessary to produce the measurement sheet from an assembly, the assembly is cut or shaved to produce a measurement sheet of a uniform thickness. The high-frequency-dielectric-heating adhesive not in a form of a sheet (e.g. pellet-shaped high-frequency-dielectric-heating adhesive) is shaped into a sheet using a hot press or the like, thereby obtaining a measurement sheet. The thickness of the measurement sheet is, for instance, in a range from 10 $\mu$m to 2 mm. The relative permittivity ($\varepsilon$'r) and the dielectric dissipation factor ($\tan\delta$) of the thus-produced sheets at 23 degrees C and at 40.68 MHz frequency are measured using an RF impedance material analyzer E4991A (manufactured by Agilent Technologies, Inc.) to calculate the values of the dielectric property ($\tan\delta/\varepsilon$'r).

The shape of the high-frequency-dielectric-heating adhesive according to the present exemplary embodiment, which is not particularly limited, is preferably sheet-shaped. In other words, the high-frequency-dielectric-heating adhesive according to the present exemplary embodiment is preferably in a form of an adhesive sheet (sometimes referred to as a high-frequency-dielectric-heating adhesive sheet hereinafter). The high-frequency-dielectric-heating adhesive embodied in a form of the adhesive sheet can further shorten the time required for the manufacturing process of the assembly.

A thickness TS1 of the adhesive sheet and a thickness TS2 of each of the three or more adherends according to the present exemplary embodiment preferably satisfy a relationship of a numerical formula (Numerical Formula 3) below.

$$TS1 < TS2 \quad \ldots (\text{Numerical Formula 3})$$

The high-frequency-dielectric-heating adhesive according to the present exemplary embodiment, which is embodied in a form of an adhesive sheet that satisfies the relationship of the above numerical formula (Numerical Formula 3), can prevent excessive heat generation from the adhesive sheet when the high-frequency electric field is applied, thereby further reducing heat damage on the adherends.

The thickness TS1 of the adhesive sheet of the present exemplary embodiment is preferably 5 $\mu$m or more, more preferably 10 $\mu$m or more, still more preferably 30 $\mu$m or more, and particularly preferably 50 $\mu$m or more.

The adhesive sheet with the thickness TS1 of 5 $\mu$m or more easily conforms to undulations of the adherend when being bonded with the adherend, thereby easily easily exhibiting the bonding strength.

The upper limit of the thickness TS1 of the adhesive sheet is not particularly limited. The thickness of the adhesive sheet, whose increase results in an increase in the entire weight of the assembly produced by bonding the adhesive sheet and the adherends, is preferably in a range without causing any problem during actual use. Considering practicality and formability of the adhesive sheet, the thickness TS1 of the adhesive sheet according to the present exemplary embodiment is preferably 2000 μm or less, more preferably 1000 μm or less, and still more preferably 600 μm or less.

A thickness accuracy of the adhesive sheet according to the present exemplary embodiment is preferably within ±10%, more preferably within ±8%, and still more preferably within ±5%.

The adhesive sheet according to the present exemplary embodiment, whose thickness accuracy is within ±10%, allows the laminate to be stably placed on a bonding machine during the bonding process.

Further, since the pressure is evenly applied on the surface of the adhesive sheet at the time of applying the high-frequency electric field, the laminate can be restrained from being shifted and/or deformed.

The thickness accuracy of the adhesive sheet can be calculated according to a method described in a corresponding item of later-described Examples below.

Usually, the thickness accuracy of the adhesive sheet is 0% or more.

The high-frequency-dielectric-heating adhesive in a form of the adhesive sheet is not only easy to handle but also shows improved workability when being bonded with the adherend as compared with a liquid adhesive, which is necessary to be applied.

Further, the thickness or the like of the high-frequency-dielectric-heating adhesive in a form of the adhesive sheet can be controlled as desired. The adhesive sheet is thus also usable in a roll-to-roll system and can be machined to have a desired area and shape by blanking or the like according to an area to be bonded with the adherend and a shape of the adherend. Accordingly, the high-frequency-dielectric-heating adhesive in a form of the adhesive sheet is significantly advantageous also in view of manufacturing process.

Thermoplastic Resin (A)

Thermoplastic Resin

The type of the thermoplastic resin (A) is not particularly limited.

In view of, for instance, an excellent meltability and a predetermined level of heat resistance, the thermoplastic resin (A) is preferably at least one resin selected from the group consisting of a polyolefin resin, styrene resin, polyacetal resin, polycarbonate resin, acrylic resin, polyamide resin, polyimide resin, polyvinyl acetate resin, phenoxy resin, and polyester resin.

In the high-frequency-dielectric-heating adhesive according to the present exemplary embodiment, the thermoplastic resin (A) is preferably a polyolefin resin or a styrene resin, more preferably a polyolefin resin. With the use of the thermoplastic resin (A) in a form of a polyolefin resin or styrene resin, the high-frequency-dielectric-heating adhesive is easily meltable when the high-frequency electric field is applied, thereby allowing the high-frequency-dielectric-heating adhesive according to the present exemplary embodiment and the adherends to be easily bonded.

Herein, the polyolefin resin, which encompasses a polyolefin resin having a polar moiety and a polyolefin resin having no polar moiety, will be referred to as a polyolefin resin having a polar moiety or a polyolefin resin having no polar moiety when the presence of the polar moiety is to be specified.

The thermoplastic resin (A) is also preferably a polyolefin resin having a polar moiety. The thermoplastic resin (A) is optionally a polyolefin resin having no polar moiety.

Polyolefin Resin

Examples of the polyolefin resin for the thermoplastic resin (A) include homopolymer resins such as polyethylene, polypropylene, polybutene, and polymethylpentene, and an α-olefin resin in a form of a copolymer of monomers selected from the group consisting of ethylene, propylene, butene, hexene, octene, and 4-methylpentene. The polyolefin resin for the thermoplastic resin (A) is optionally a single type of a resin or alternatively a combination of two or more types of resins.

Polyolefin Resin Having Polar Moiety

The polar moiety, which is a part of the polyolefin resin having a polar moiety, is not particularly limited as long as the moiety can polarize the polyolefin resin. The polyolefin resin having a polar moiety, which exhibits high bonding force with an adherend, is preferable.

The polyolefin thermoplastic resin having a polar moiety is optionally a copolymer of an olefin monomer and a monomer having a polar moiety. Alternatively, the polyolefin thermoplastic resin having a polar moiety is optionally a resin in which a polar moiety is introduced through modification, for instance, an addition reaction, into an olefin polymer obtained through polymerization of olefin monomers.

The type of the olefin monomer constituting the polyolefin resin having a polar moiety is not particularly limited. Examples of the olefin monomer include ethylene, propylene, butene, hexene, octene, and 4-methyl-1-pentene. One of the above examples may be used alone or a combination of two or more thereof may be used as the olefin monomer.

The olefin monomer is preferably at least one of ethylene and propylene in view of its excellent mechanical strength and stable bonding properties.

Preferably, a constituent unit derived from olefin in the polyolefin resin having a polar moiety is a constituent unit derived from ethylene or propylene.

Examples of the polar moiety include a hydroxyl group, carboxy group, vinyl acetate moiety, and anhydride moiety. Examples of the polar moiety also include acid-modified structure introduced into the polyolefin resin through acid modification.

The acid-modified structure as the polar moiety is a moiety that is introduced by acid modification of a thermoplastic resin (e.g., a polyolefin resin). A compound used for acid modification of a thermoplastic resin (e.g., polyolefin resin) is exemplified by an unsaturated carboxylic acid derivative component derived from any one of an unsaturated carboxylic acid, an acid anhydride of an unsaturated carboxylic acid, and an ester of an unsaturated carboxylic acid. Herein, the polyolefin resin having the acid-modified structure is occasionally referred to as an acid-modified polyolefin resin.

Examples of the unsaturated carboxylic acid include an acrylic acid, a methacrylic acid, a maleic acid, a fumaric acid, an itaconic acid, and a citraconic acid.

Examples of the acid anhydride of the unsaturated carboxylic acid include maleic anhydride, itaconic anhydride, and citraconic anhydride.

Examples of the ester of the unsaturated carboxylic acid include methyl acrylate, ethyl acrylate, methyl methacrylate, ethyl methacrylate, butyl methacrylate, dimethyl maleate, monomethyl maleate, dimethyl fumarate, diethyl fumarate, dimethyl itaconate, diethyl itaconate, dimethyl citraconate, diethyl citraconate, and dimethyl tetrahydrophthalate anhydride.

A melt flow rate (sometimes abbreviated as MFR hereinafter) of the thermoplastic resin (A) of the high-frequency-dielectric-heating adhesive according to the present exemplary embodiment is preferably 0.5 g/10 min or more, more preferably 1.0 g/10 min or more, and still more preferably 2.0 g/10 min or more.

The melt flow rate of the thermoplastic resin (A) of the high-frequency-dielectric-heating adhesive according to the present exemplary embodiment is preferably 100 g/10 min or less, more preferably 90 g/10 min or less, still more preferably 80 g/10 min or less, still further more preferably 50 g/10 min or less, yet still further more preferably 30 g/10 min or less, and particularly preferably 15 g/10 min or less.

The high-frequency-dielectric-heating adhesive whose MFR is 0.5 g/10 min or more can keep fluidity and is likely to provide film-thickness accuracy when, for instance, being molded into a film by extrusion molding. The high-frequency-dielectric-heating adhesive whose MFR is 100 g/10 min or less is likely to exhibit film-formability. For instance, with the MFR being 50 g/10 min or less, film-formability of the high-frequency-dielectric-heating adhesive through the extrusion molding is more likely to be improved.

The MFR of the thermoplastic resin (A) can be measured, for instance, at a predetermined test temperature and load in accordance with JIS K 7210-1: 2014 or JIS K 6924-1: 1997. The test conditions are, for instance, a test temperature of 190 degrees C and a load of 2.16 kg in a case where the constituent unit derived from olefin in the thermoplastic resin (A) is polyethylene. The test conditions are the test temperature of 190 degrees C and the load of 2.16 kg in a case where the constituent unit derived from olefin is an ethylene-vinyl acetate copolymer,.

Dielectric Filler (B)

The dielectric filler (B) generates heat upon application of a high-frequency electric field.

Preferably, the dielectric filler (B) is a filler that generates heat upon application of a high-frequency electric field having a frequency range of 3 MHz to 300 MHz. Preferably, the dielectric filler (B) is a filler that generates heat upon application of a high-frequency electric field having, within the frequency range of 3 MHz to 300 MHz, for example, a frequency of 13.56 MHz, 27.12 MHz, or 40.68 MHz.

Type of Dielectric Filler (B)

The dielectric filler (B) is preferably a single one or a combination of two or more of zinc oxide, silicon carbide (SiC), anatase-type titanium oxide, barium titanate, barium titanate zirconate, lead titanate, potassium niobate, rutile-type titanium oxide, hydrated aluminum silicate, inorganic substances having crystallization water such as hydrated aluminosilicate salt of alkali metal, and inorganic substances having crystallization water such as hydrated aluminosilicate salt of alkaline earth metal.

Preferably, the dielectric filler (B) contains at least one selected from the group consisting of zinc oxide, silicon carbide, barium titanate, and titanium oxide.

Among the dielectric fillers exemplified above, the dielectric filler (B) is still more preferably zinc oxide in view of its wide variety of types and selectability from among various shapes and sizes, which allow the bonding properties and mechanical properties of the high-frequency-dielectric-heating adhesive to be modified depending on the usage thereof. With the use of zinc oxide for the dielectric filler (B), a colorless high-frequency-dielectric-heating adhesive can be obtained. Zinc oxide, whose density is small among the dielectric fillers, is unlikely to cause increase in the total weight of a bonded component when being contained in the high-frequency-dielectric-heating adhesive as the dielectric filler (B) for bonding the adherends, as compared with the use of an adhesive containing any other dielectric filler. Since the hardness of zinc oxide is not excessively high among ceramics, zinc oxide is unlikely to damage the machine for producing the high-frequency-dielectric-heating adhesive. Zinc oxide, which is an inactive oxide, is blendable with a thermoplastic resin with a small damage thereto.

Further, titanium oxide as the dielectric filler (B) is preferably at least one of anatase-type titanium oxide or rutile-type titanium oxide, more preferably anatase-type titanium oxide in terms of its excellent dielectric property.

Volume Content Ratio

The volume content ratio of the dielectric filler (B) in the high-frequency-dielectric-heating adhesive is preferably 5 vol% or more, more preferably 8 vol% or more, and still more preferably 10 vol% or more.

The volume content ratio of the dielectric filler (B) in the high-frequency-dielectric-heating adhesive is preferably 50 vol% or less, more preferably 40 vol% or less, still more preferably 35 vol% or less, and still further more preferably 25 vol% or less.

With the volume content ratio of the dielectric filler (B) in the high-frequency-dielectric-heating adhesive being 5 vol% or more, heat-generation properties can be improved, thereby allowing firm bonding between the high-frequency-dielectric-heating adhesive and the adherends.

With the volume content ratio of the dielectric filler (B) in the high-frequency-dielectric-heating adhesive being 50 vol% or less, decrease in the strength of the adhesive can be prevented, consequently preventing decrease in the bonding strength with the use of the adhesive. Further, the high-frequency-dielectric-heating adhesive according to the present exemplary embodiment, which is in a form of an adhesive sheet and contains the dielectric filler (B) at the volume content ratio of 50 vol% or less, is likely to exhibit flexibility for the sheet and prevent reduction in toughness, thereby allowing the high-frequency-dielectric-heating adhesive sheet to be processed into a desired shape in a subsequent step.

Since the thermoplastic resin (A) and the dielectric filler (B) are contained in the high-frequency-dielectric-heating adhesive according to the present exemplary embodiment, the volume content ratio of the dielectric filler (B) is preferably 5 vol% or more, more preferably 8 vol% or more, and still more preferably 10 vol% or more with respect to a total volume of the thermoplastic resin (A) and the dielectric filler (B). Further, the volume content ratio of the dielectric filler (B) is preferably 50 vol% or less, more preferably 40 vol% or less, still more preferably 35 vol% or less, and still further more preferably 25 vol% or less with respect to the total volume of the thermoplastic resin (A) and the dielectric filler (B).

Average Particle Diameter

The volume average particle diameter of the dielectric filler (B) is preferably 1 $\mu$m or more, more preferably 2 $\mu$m or more, and still more preferably 3 $\mu$m or more.

The volume average particle diameter of the dielectric filler (B) is preferably 30 $\mu$m or less, more preferably 25 $\mu$m or less, and still more preferably 20 $\mu$m or less.

With the volume average particle diameter of the dielectric filler (B) being 1 $\mu$m or more, the high-frequency-dielectric-heating adhesive exhibits high heat generation performance upon application of the high-frequency electric field, so that the adhesive layer can be firmly attached with the adherends within a short time.

With the volume average particle diameter of the dielectric filler (B) being 30 $\mu$m or less, the high-frequency-dielectric-heating adhesive exhibits high heat generation performance upon application of the high-frequency electric field, so that the adhesive layer can be firmly attached with the adherends within a short time. Further, when the high-frequency-dielectric-heating adhesive according to the present exemplary embodiment is in a form of an adhesive sheet, decrease in the strength of the high-frequency-dielectric-heating adhesive sheet can be prevented with the volume average particle diameter of the dielectric filler (B) being 30 $\mu$m or less.

The volume average particle diameter of the dielectric filler (B) is measured by a method as described below. A particle size distribution of the dielectric filler (B) is measured by a laser diffraction/scattering method and the volume average particle diameter is calculated from a result of the particle size distribution measurement in accordance with JIS Z 8819-2: 2001.

When the high-frequency-dielectric-heating adhesive according to the present exemplary embodiment is in a form of an adhesive sheet, it is preferable that an average particle diameter $D_F$ of the dielectric filler (B) and the thickness TS1 of the adhesive sheet satisfy a relationship of $1 \leq TS1/D_F \leq 2500$.

$TS1/D_F$ is preferably 1 or more, more preferably 2 or more, still more preferably 5 or more, still further more preferably 10 or more, and yet still further more preferably 20 or more. With $TS1/D_F$ being 1 or more, decrease in bonding strength caused by contact of the dielectric filler (B) with the adherend at the time of bonding can be prevented.

$TS1/D_F$ is preferably 2500 or less, more preferably 2000 or less, still more preferably 1750 or less, still further more preferably 1000 or less, yet still further more preferably 500 or less, even still further more preferably 100 or less, and yet even still further more preferably 50 or less. With $TS1/D_F$ being 2500 or less, load applied on a sheet producing device in producing the high-frequency-dielectric-heating adhesive sheet can be reduced.

Additive(s)

The high-frequency-dielectric-heating adhesive according to the present exemplary embodiment may or may not contain an additive.

When the high-frequency-dielectric-heating adhesive according to the present exemplary embodiment contains an additive, examples of the additive include a tackifier, a plasticizer, a wax, a colorant, an antioxidant, an ultraviolet absorber, an antimicrobial agent, a coupling agent, a viscosity modifier, an organic filler, and an inorganic filler. The organic and inorganic fillers as the additive are different from the dielectric filler.

The tackifier and plasticizer allow for improving the melting characteristics and adhesive characteristics of the high-frequency-dielectric-heating adhesive.

Examples of the tackifier include a rosin derivative, a polyterpene resin, an aromatic modified terpene resin, a hydride of an aromatic modified terpene resin, a terpene phenol resin, a coumarone-indene resin, an aliphatic petroleum resin, an aromatic petroleum resin, and a hydride of an aromatic petroleum resin.

Examples of the plasticizer include a petroleum process oil, a natural oil, diacid dialkyl, and a low-molecular-weight liquid polymer. Examples of the petroleum process oil include a paraffin process oil, a naphthene process oil, and an aromatic process oil. Examples of the natural oil include a castor oil and a tall oil. Examples of diacid dialkyl include dibutyl phthalate, dioctyl phthalate, and dibutyl adipate. Examples of the low-molecular-weight liquid polymer include liquid polybutene and liquid polyisoprene.

When the high-frequency-dielectric-heating adhesive according to the present exemplary embodiment contains an additive, the content ratio of the additive in the high-frequency-dielectric-heating adhesive is, normally, based on a total mass of the high-frequency-dielectric-heating adhesive, preferably 0.01 mass% or more, more preferably 0.05 mass% or more, and still more preferably 0.1 mass% or more. Further, the content ratio of the additive in the high-frequency-dielectric-heating adhesive is preferably 20 mass% or less, more preferably 15 mass% or less, and still more preferably 10 mass% or less.

The high-frequency-dielectric-heating adhesive according to the present exemplary embodiment preferably contains no solvent. The high-frequency-dielectric-heating adhesive containing no solvent is not likely to have a problem of volatile organic compounds (VOC) that may otherwise be caused by an adhesive used for bonding with an adherend.

Preferably, the high-frequency-dielectric-heating adhesive according to the present exemplary embodiment contains no conductive substance such as a metal, carbon, or a carbon compound containing carbon as a main component (e.g., carbon black). The high-frequency-dielectric-heating adhesive according to the present exemplary embodiment preferably contains, for instance, none of carbon steel, $\alpha$ iron, $\gamma$ iron, $\delta$ iron, copper, iron oxide, yellow copper, aluminum, iron-nickel alloy, iron-nickel-chromium alloy, carbon fiber, and carbon black.

When the high-frequency-dielectric-heating adhesive according to the present exemplary embodiment contains conductive substances, the content ratios of the conductive substances in the adhesive layer are each independently, based on a total mass of the adhesive layer, preferably 20 mass% or less, more preferably 10 mass% or less, still more preferably 5 mass% or less, still further more preferably 1 mass% or less, and yet still further more preferably 0.1 mass% or less.

Particularly preferably, the adhesive contains 0 mass% of the conductive substances.

With the content ratio of the conductive substances in the adhesive being 20 mass% or less, carbonization of a bonding portion and an adherend caused by electrical breakdown during a dielectric heating process is likely to be prevented.

The total of the content ratios of the thermoplastic resin (A) and the dielectric filler (B) in the high-frequency-dielectric-heating adhesive according to the present exemplary embodiment is preferably 80 mass% or more, more preferably 90 mass% or more, and still more preferably 99 mass% or more.

Method of Producing High-Frequency-Dielectric-Heating Adhesive

The high-frequency-dielectric-heating adhesive according to the present exemplary embodiment is producible, for example, by mixing the components described above. The high-frequency-dielectric-heating adhesive according to the present exemplary embodiment in a form of an adhesive sheet can be produced by, for instance, premixing the above-described components, kneading the premixed components using a known kneading machine (e.g. an extruder, heat roller), and molding the kneaded components through a known molding method (e.g. extrusion molding, calendering, injection molding, and casting). Among the above-exemplified molding methods, extrusion molding is preferable.

Adherend

The material used for the adherend is not particularly limited. The material of the adherend may be any one of an organic material, an inorganic material (including metal material etc.), and a composite material of an organic material and an inorganic material.

The material of the adherend is preferably an organic material. Examples of the organic material as the material of the adherend include a plastic material and a rubber material. Examples of the plastic material include a polypropylene resin, a polyethylene resin, an epoxy resin, a polyurethane resin, an acrylonitrile-butadienestyrene copolymer resin (ABS resin), a polycarbonate resin (PC resin), a polyamide resin (e.g., nylon 6 and nylon 66), a polyester resin (e.g. polyethylene terephthalate (PET resin) and a polybutylene terephthalate resin (PBT resin)), a polyacetal resin (POM resin), a polymethyl methacrylate resin, and a polystyrene resin. Examples of the rubber material include styrene-butadiene rubber (SBR), ethylene propylene rubber (EPR), and silicone rubber. The adherend may be a foam of the organic material. When the material of the adherend is a thermoplastic resin, it is preferable that the thermoplastic resin contained in the adherend is different from the thermoplastic resin (A) contained in the high-frequency-dielectric-heating adhesive. The adherend, which is more unlikely to be damaged by the above arrangement, can be bonded within a further short time.

Examples of the inorganic material as the material of the adherend include a glass material, a cement material, a ceramic material, and a metal material. Further, the adherend may be a fiber reinforced resin (fiber reinforced plastics (FRP)) that is a composite material of fibers and the above plastic material. The plastic material in the fiber-reinforced resin is at least one resin selected from the group consisting of a polypropylene resin, a polyethylene resin, a polyurethane resin, an acrylonitrile-butadiene-styrene copolymer resin (ABS resin), a polycarbonate resin (PC resin), a polyamide resin (e.g., nylon 6 and nylon 66), a polyester resin (e.g., polyethylene terephthalate (PET resin) and a polybutylene terephthalate resin (PBT resin)), a polyacetal resin (POM resin), a polymethyl methacrylate resin, an epoxy resin, and a polystyrene resin. Examples of fiber in the fiber-reinforced resin include a glass fiber, a Kevlar® fiber, and a carbon fiber.

It is preferable that the adherend has low conductivity.

When a plurality of adherends are to be bonded with the use of the high-frequency-dielectric-heating adhesive according to the present exemplary embodiment, the material of the adherends are the same or different.

The shape of the adherend is not particularly limited. When the high-frequency-dielectric-heating adhesive according to the present exemplary embodiment is in a form of an adhesive sheet, it is preferable that the adherend, which preferably has a surface for the adhesive sheet to be attached, is sheet-shaped or plate-shaped. When a plurality of adherends are to be bonded, the shape and size of the adherends may be the same or different. The thicknesses of the adherends preferably each independently satisfy the relationship of the above numerical formula (Numerical Formula 3).

Assembly

The assembly according to the present exemplary embodiment includes the high-frequency-dielectric-heating adhesive according to the present exemplary embodiment and the three or more adherends. The three or more adherends of the assembly according to the present exemplary embodiment are bonded by the high-frequency-dielectric-heating adhesive according to the present exemplary embodiment. The assembly according to the present exemplary embodiment is preferably an assembly (e.g. laminate) in which the three or more adherends are laminated through the high-frequency-dielectric-heating adhesive.

The three or more adherends are optionally bonded by an adhesive (high-frequency-dielectric-heating adhesive) of the same composition or, alternatively, by adhesives (high-frequency-dielectric-heating adhesives) of mutually different compositions. In the assembly according to the present exemplary embodiment, the composition of the high-frequency-dielectric-heating adhesive is preferably appropriately selected in view of the material of the adherend in contact with the high-frequency-dielectric-heating adhesive, the bonding strength with the adherend, the bonding time, and the like.

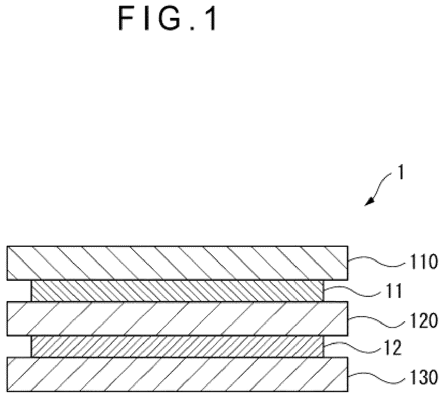

Fig. 1 is a schematic cross-sectional view of an assembly 1 according to an example of the present exemplary embodiment.

The assembly 1 includes the three adherends (a first adherend 110, a second adherend 120, and a third adherend 130), a first high-frequency-dielectric-heating adhesive 11 interposed between the first adherend 110 and the second adherend 120, and a second high-frequency-dielectric-heating adhesive 12 interposed between the second adherend 120 and the third adherend 130. The assembly 1 is a laminate, in which the first adherend 110, the first high-frequency-dielectric-heating adhesive 11, the second adherend 120, the second high-frequency-dielectric-heating adhesive 12, and the third adherend 130 are layered in this order.

When the assembly according to the present exemplary embodiment is in a form of a laminate, the material(s) for the adherends forming the outermost layers of the laminate is preferably an organic material. For instance, in the assembly 1 illustrated in Fig. 1, the materials for the first adherend 110 and the third adherend 130 (outermost layers) are preferably an organic material.

In the assembly according to the present exemplary embodiment, the location, thickness and the like of the high-frequency-dielectric-heating adhesives are not limited to the location, thickness and the like illustrated in Fig. 1.

In the assembly according to the present exemplary embodiment, the shape, size, number and the like of the adherends are not limited to the shape, size, number and the like illustrated in Fig. 1. For instance, the shape of a cut cross section of each of the adherends in a gravitational direction may be a rectangular shape or a shape with inclinantion (e.g. triangle).

The assembly according to the present exemplary embodiment is not limited to the assembly as illustrated in Fig. 1, in which a plurality of adherends are laminated through the high-frequency-dielectric-heating adhesive.

Manufacturing Method of Assembly

The manufacturing method of the assembly according to the present exemplary embodiment includes a step for placing the high-frequency-dielectric-heating adhesive according to the present exemplary embodiment between corresponding ones of the three or more of the adherends and a step for applying a high-frequency electric field to the high-frequency-dielectric-heating adhesive to bond the three or more adherends.

In the manufacturing method of the assembly according to the present exemplary embodiment, it is preferable that the three or more adherends and the high-frequency-dielectric-heating adhesive, which are placed between electrodes of a dielectric heating device, are applied with a high-frequency electric field while being pressed by the electrodes. The assembly is more likely to be produced within a further short time by thus applying the high-frequency electric field while pressing with the electrodes.

According to the manufacturing method using the high-frequency-dielectric-heating adhesive according to the present exemplary embodiment, only a desired part can be locally heated from an outside using a dielectric heating device. Accordingly, the manufacturing method using the high-frequency-dielectric-heating adhesive according to the present exemplary embodiment is effective even when the adherends are in a form of a large-sized and complex three-dimensional assembly, a thick and complex three-dimensional assembly or the like, which requires higher dimensional accuracy.

An example of the manufacturing method of the assembly according to the present exemplary embodiment will be described below with reference to an arrangement for bonding three or more adherends using the high-frequency-dielectric-heating adhesive according to the present exemplary embodiment. It should however be noted that the scope of the invention is not limited by the above arrangement.

A bonding method according to an aspect of the present exemplary embodiment includes Step P1 and Step P2 below.

Step P1

In Step P1, the high-frequency-dielectric-heating adhesive according to the present exemplary embodiment is placed between corresponding ones of the three or more adherends. When an assembly in a form of a laminate according to the present exemplary embodiment is to be produced, the adherends and the high-frequency-dielectric-heating adhesive are, for instance, alternately placed to laminate the three or more adherends through the high-frequency-dielectric-heating adhesive in Step P1.

It is preferable that the high-frequency-dielectric-heating adhesive is held between the adherends so that the adherends can be mutually bonded. The high-frequency-dielectric-heating adhesive is held partially between the adherends, between the adherends at a plurality of points, or between the adherends over the entire surfaces. In order to enhance the bonding strength between the adherends, it is preferable that the high-frequency-dielectric-heating adhesive is held between the adherends over the entire bonding surfaces.

In an example for holding the high-frequency-dielectric-heating adhesive partially between the adherends, the high-frequency-dielectric-heating adhesive is placed in a frame-shape along an outer periphery of the bonding surfaces of the adherends to hold the high-frequency-dielectric-heating adhesive between the adherends. The high-frequency-dielectric-heating adhesive, which is thus placed in a frame-shape, ensures the bonding strength between the adherends and reduces the weight of the assembly as compared with an instance having the high-frequency-dielectric-heating adhesive placed all over the bonding surfaces.

Further, according to the above aspect, where the high-frequency-dielectric-heating adhesive is held partially between the adherends, the used amount and the size of the high-frequency-dielectric-heating adhesive can be reduced, so that the time for the high-frequency dielectric heating process can be shortened as compared with an instance where the high-frequency-dielectric-heating adhesive is placed all over the bonding surfaces.

Step P2

In Step P2, a high-frequency electric field is applied on the high-frequency-dielectric-heating adhesive placed between the adherends in Step P1 to bond the three or more adherends. The frequency of the high-frequency electric field to be applied is, for instance, in a range from 3 MHz to 300 MHz. For instance, a dielectric heating device is used to apply the high-frequency electric field on the high-frequency-dielectric-heating adhesive.

Dielectric Heating Device

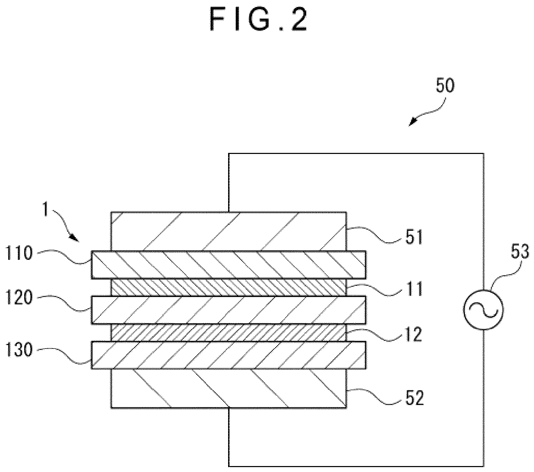

Fig. 2 is a schematic illustration showing a high-frequency dielectric heating process performed with the use of the high-frequency-dielectric-heating adhesive and a dielectric heating device according to the present exemplary embodiment.
A dielectric heating device 50 shown in Fig. 2 includes a first high-frequency electric field application electrode 51, a second high-frequency electric field application electrode 52, and a high-frequency power source 53.
The first high-frequency electric field application electrode 51 and the second high-frequency electric field application electrode 52 are mutually oppositely disposed. The first high-frequency electric field application electrode 51 and the second high-frequency electric field application electrode 52 have a press mechanism. The press mechanism of the electrodes (the first high-frequency electric field application electrode 51 and the second high-frequency electric field application electrode 52) of the dielectric heating device 50 allows the three or more adherends and the high-frequency-dielectric-heating adhesive disposed between the electrodes to be pressed while being applied with the high-frequency electric field.
Fig. 2 shows an example of a method for producing the assembly 1 (see Fig. 1) using the dielectric heating device 50. With the use of the dielectric heating device 50, the first adherend 110, the first high-frequency-dielectric-heating adhesive 11, the second adherend 120, the second high-frequency-dielectric-heating adhesive 12, and the third adherend 130 can be pressed between the first high-frequency electric field application electrode 51 and the second high-frequency electric field application electrode 52.
An arrangement of electrodes in which the first high-frequency electric field application electrode 51 and the second high-frequency electric field application electrode 52 form a pair of mutually parallel electrodes is sometimes referred to as a "parallel-plate type."
A high-frequency dielectric heating device in a parallel-plate type is also preferably used to apply a high-frequency electric field. The parallel-plate type high-frequency dielectric heating device, in which the high-frequency electric field penetrates through the high-frequency-dielectric-heating adhesive located between the electrodes, can heat the entirety of the high-frequency-dielectric-heating adhesive, thus bonding the adherends and the high-frequency-dielectric-heating adhesive within a short time. A parallel-plate type high-frequency dielectric heating device is preferably used in order to produce an assembly in a form of a laminate.
The high-frequency power source 53 for applying high-frequency (e.g. approx. 13.56 MHz, approx. 27.12 MHz or approx. 40.68 MHz) waves is connected to both of the first high-frequency electric field application electrode 51 and the second high-frequency electric field application electrode 52.
As illustrated in Fig. 2, the dielectric heating device 50 performs dielectric heating process through the first high-frequency-dielectric-heating adhesive 11 and the second high-frequency-dielectric-heating adhesive 12 held between corresponding ones of the first adherend 110, second adherend 120, and the third adherend 130. In addition to the dielectric heating, the dielectric heating device 50 bonds the first adherend 110, second adherend 120, and the third adherend 130 through pressurization by the first high-frequency electric field application electrode 51 and the second high-frequency electric field application electrode 52. It should be noted that the three or more adherends are optionally bonded through pressurization solely by, for instance, self weights of the high-frequency-dielectric-heating adhesive and the adherends without performing the pressurization process.
When a high-frequency electric field is applied between the first high-frequency electric field application electrode 51 and the second high-frequency electric field application electrode 52, the dielectric filler (not shown), which is dispersed in the components of the first and second high-frequency-dielectric-heating adhesives 11 and 12, absorbs energy of the high-frequency waves.
The dielectric filler, which serves as a heat source, generates heat to melt the thermoplastic resin component, thereby eventually firmly bonding the first adherend 110, the second adherend 120, and the third adherend 130 even through a short-time process.
The first high-frequency electric field application electrode 51 and the second high-frequency electric field application electrode 52, which have a press mechanism, serve as a press machine. Accordingly, the first adherend 110, the second adherend 120, and the third adherend 130 can be more firmly bonded by applying a pressure in a compression direction by the first and second high-frequency electric field application electrodes 51, 52 and by heating and melting the first and second high-frequency-dielectric-heating adhesives 11, 12 by the first and second high-frequency electric field application electrodes 51, 52. It should be noted that the manufacturing method of the assembly according to the invention, which is described with reference to an example for producing the assembly 1 shown in Fig. 1 in the description below, is not limited by this example.

High-Frequency Dielectric Heating Conditions

The high-frequency dielectric heating conditions, which can be altered as necessary, are preferably as follows.

The output of the high-frequency electric field is preferably 10 W or more, more preferably 30 W or more, still more preferably 50 W or more, and still further more preferably 80 W or more.

The output of the high-frequency electric field is preferably 50,000 W or less, more preferably 20,000 W or less, still more preferably 15,000 W or less, still further more preferably 10,000 W or less, and yet still further more preferably 1,000 W or less.

With the output of the high-frequency electric field being 10 W or more, difficulty in increasing the temperature during the dielectric heating process can be avoided, thereby easily achieving a sufficient bonding strength.

With the output of the high-frequency electric field output being 50,000 W or less, difficulty in controlling the temperature when the dielectric heating is performed is likely to be prevented.

The application time of the high-frequency electric field is preferably one second or more.

The application time of the high-frequency electric field is preferably 300 seconds or less, more preferably 240 seconds or less, still more preferably 180 seconds or less, still further more preferably 120 seconds or less, yet still further more preferably 90 seconds or less.

With the application time of the high-frequency electric field being one second or more, difficulty in temperature rise during the dielectric heating process is preventable, thereby easily achieving a sufficient bonding force.

With the application time of the high-frequency waves of 300 seconds or less, difficulties that production efficiency of the assembly is lowered, production cost is increased, and the adherends are thermally degraded are easily preventable.

The frequency of the high-frequency electric field to be applied is preferably 1 kHz or more, more preferably 1 MHz or more, still more preferably 3 MHz or more, still further more preferably 5 MHz or more, and yet still further more preferably 10 MHz or more.

The frequency of the high-frequency electric field to be applied is preferably 300 MHz or less, more preferably 100 MHz or less, still more preferably 80 MHz or less, and still further more preferably 50 MHz or less. Specifically, 13.56 MHz, 27.12 MHz, or 40.68 MHz, which is the industrial frequency band assigned by International Telecommunication Union, is used in the manufacturing method and bonding method using the high-frequency dielectric heating of the present exemplary embodiment.

Effects of Exemplary Embodiment

The high-frequency-dielectric-heating adhesive of the present exemplary embodiment, whose melt volume rate in the above range of the lower-limit temperature TL or more and the upper-limit temperature TU or less is in a range from 1 cm$^3$/10 min to 300 cm$^3$/10 min, can provide appropriate fluidity. Accordingly, three or more adherends can be bonded in a single process within a short time and offset between the adherends can be restrained. Further, the present exemplary embodiment can provide an assembly including three or more adherends bonded by the high-frequency-dielectric-heating adhesive and a manufacturing method of the assembly. The assembly provided by bonding the three or more adherends by the manufacturing method of the assembly can be produced within a short time while reducing the offset between the adherends.

The high-frequency-dielectric-heating adhesive is excellent in terms of water resistance and moisture resistance as compared with a typical adhesive.

The high-frequency-dielectric-heating adhesive according to the present exemplary embodiment is locally heated by applying the high-frequency electric field. Accordingly, damage on the entirety of the adherends during a bonding process with the adherends is likely to be prevented with the use of the high-frequency-dielectric-heating adhesive according to the present exemplary embodiment.

Modifications of Exemplary Embodiment

The invention is not limited to the above exemplary embodiment. The invention can include modifications, improvements, and the like as long as they are compatible with an object of the invention.

The high-frequency dielectric heating process does not necessarily use the dielectric heating device provided with oppositely installed electrodes as described in the above exemplary embodiment, but a lattice-electrode high-frequency dielectric heating device is alternatively usable. The lattice-electrode high-frequency dielectric heating device includes a lattice electrode, in which electrodes having a first polarity and electrodes having a second polarity are alternately and coplanarly arranged at regular intervals, the first polarity being opposite to the second polarity. It should be noted that the illustrated exemplary dielectric heating device includes oppositely disposed electrodes for simplification.

Examples

The invention will be described below in further detail with reference to Examples. The invention is by no means limited to these Examples.

Production of High-Frequency-Dielectric-Heating Adhesive

Examples 1 to 6 and Comparatives 1 to 3

The thermoplastic resin (A) and the dielectric filler (B) listed in Table 1 were premixed. The premixed materials were fed into a hopper of a biaxial extruder with 30 mm hole diameter, and melted and kneaded at a cylinder setting temperature and die temperature that had been appropriately adjusted depending on the type of the thermoplastic resin (A). After cooling the melted and kneaded material, the material was cut to produce granular pellets. Subsequently, the produced granular pellets were loaded into a hopper of a uniaxial extruder provided with a T-die. Then, after the cylinder temperature and the die temperature were adjusted depending on the type of the thermoplastic resin (A), a film-shaped kneaded product, which was extruded from the T-die, was cooled by a cooling roller to produce a 400-$\mu$m thick sheet-shaped high-frequency-dielectric-heating adhesive (high-frequency dielectric adhesive sheet) according to Examples 1 to 6 and Comparatives 1 to 3.

Details of the thermoplastic resins (A), the dielectric fillers (B), and the adherends listed in Table 1 are as follows.

Thermoplastic Resin (A)

LDPE-1: low-density polyethylene (manufactured by Sumitomo Chemical Co., Ltd., trade name "SUMIKATHENE L420," MFR: 3.5 g/10 min (in accordance with JIS K 7210-1: 2014))
LDPE-2: low-density polyethylene (manufactured by Sumitomo Chemical Co., Ltd., trade name "SUMIKATHENE L705," MFR: 7.0 g/10 min (in accordance with JIS K 7210-1: 2014))
LDPE-3: low-density polyethylene (manufactured by Sumitomo Chemical Co., Ltd., trade name "SUMIKATHENE G801," MFR: 20 g/10 min (in accordance with JIS K 7210-1: 2014))
LDPE-4: low-density polyethylene (manufactured by Sumitomo Chemical Co., Ltd., trade name "SUMIKATHENE G807," MFR: 75 g/10 min (in accordance with JIS K 7210-1: 2014))
LDPE-5: low-density polyethylene (manufactured by Sumitomo Chemical Co., Ltd., trade name "SUMIKATHENE F101-1," MFR: 0.3 g/10 min (in accordance with JIS K 7210-1: 2014))
EVA-1: ethylene-vinyl acetate copolymer resin (manufactured by DOW-MITSUI POLYCHEMICALS CO.,LTD., trade name "EVAFLEX EV560," MFR: 3.5 g/10 min (in accordance with JIS K 7210-1: 2014))
EVA-2: ethylene-vinyl acetate copolymer resin (manufactured by TOSOH CORPORATION, trade name "Ultracene 685," MFR: 2500 g/10 min (in accordance with JIS K 6924-1: 1997))
EVA-3: ethylene-vinyl acetate copolymer resin (manufactured by TOSOH CORPORATION, trade name "Ultracene 722," MFR: 400 g/10 min (in accordance with JIS K 6924-1: 1997))

Dielectric Filler (B)

ZnO: zinc oxide (produced by SAKAI CHEMICAL INDUSTRY CO., LTD., product name "LP-ZINC11").

Volume Average Particle Diameter of Dielectric Filler

The particle size distribution of the dielectric filler was measured by a laser diffraction/scattering method. The volume average particle diameter was calculated from a result of the measurement of particle size distribution in accordance with JIS Z 8819-2: 2001. The calculated volume average particle diameter of zinc oxide (ZnO) was 11 $\mu$m.

Adherend

Plate-shaped adherends (length: 75 mm, width: 25 mm, thickness: 2 mm) were produced with a use of a glass fiber-polypropylene resin plate. The flow start temperature TF2 of the adherends was 183 degrees C. The dielectric property DP2 of the adherends was 0.000.

Softening Temperature and Flow Start Temperature

The softening temperature and the flow start temperature of the high-frequency-dielectric-heating adhesive were measured using a drop flow tester (model No. "CFT-100D" produced by Shimadzu Corporation). A stroke displacement rate (mm/min) that changed depending on rising temperature was measured at a load of 5.0 kg and a sample-temperature-increase rate of 10 degrees C/min using a die (hole diameter: 2.0 mm, hole length: 5.0 mm) and a cylinder (inner diameter: 11.329 mm) to obtain a temperature-dependent chart of the stroke displacement rate of the measurement sample. In this chart, a peak temperature on a low-temperature side was determined to be the softening temperature. Further, a temperature at which the stroke-displacement temperature rose again after passing through the peak of the softening temperature was determined as the flow start temperature. The flow start temperature of the adherends was measured in the same manner as described above on measurement samples produced by cutting the adherends into pieces (size: approximately 2 mm × 2 mm × 2 mm).

Thermal Decomposition Temperature

The thermal decomposition temperature of the high-frequency-dielectric-heating adhesive was measured using a thermal analyzer (manufactured by Shimadzu Corporation, thermal analyzer TG-DTA simultaneous measuring instrument, Model No. "DTG-60").The measurement was conducted under atmospheric atmosphere under conditions that the temperature was raised at an increase rate of 10 degrees C/min and in a range from 30 to 500 degrees C. A heat generation peak was observed at a low-temperature side of the DTA curve near a temperature for the weight observed in a resultant TG curve to start decreasing. A temperature at a peak top of the heat generation peak was determined to be the thermal decomposition temperature (unit: degrees C).

MVR

The melt volume rate (MVR) of the high-frequency-dielectric-heating adhesive was measured using a drop flow tester (model No. "CFT-100D" manufactured by Shimadzu Corporation). The measurement was performed with a use of a die (hole diameter 2.0 mm, length 5.0 mm) and a cylinder with an inner diameter of 11.329 mm at a measurement load as follows. The measurement load at a temperature higher than the softening temperature of the high-frequency-dielectric-heating adhesive by 10 degrees C (lower-limit temperature TL: softening temperature (degrees C) + 10 degrees C) was 20 kg, and the measurement load at a temperature lower than the thermal decomposition temperature of the high-frequency-dielectric-heating adhesive by 10 degrees C (upper-limit temperature TU: thermal decomposition temperature (degrees C) - 10 degrees C) was 5 kg. The MVR was measured at each of the lower-limit temperature TL and at the upper-limit temperature TU.

Thickness Accuracy

Thicknesses of randomly selected twenty five points of the high-frequency dielectric adhesive sheet were measured under a condition of 23 degrees C. The thickness was measured using a constant-pressure thickness gauge (model number "PG-02J" in accordance with standards JIS K 6783, JIS Z 1702, and JIS Z 1709) produced by TECLOCK Co., Ltd. Average $T_{ave}$ of the thicknesses, maximum value $T_{max}$ of the thicknesses, and minimum value $T_{min}$ of the thicknesses were calculated on the basis of the measurement results. The thickness accuracy on a plus side was calculated according to a numerical formula (Numerical Formula 4A) below. The thickness accuracy on a minus side was calculated according to a numerical formula (Numerical Formula 4B) below. The displayed thickness accuracy is based on a larger one of the values of the thickness accuracies on the plus and minus sides. For instance, when the value of the thickness accuracy on the plus side is +3% and the value of the thickness accuracy on the minus side is -2%, the thickness accuracy is displayed to be ±3%.

$$\{(T_{max} - T_{ave})/T_{ave}\} \times 100 \qquad \ldots (\text{Numerical Formula 4A})$$

$$\{(T_{min} - T_{ave})/T_{ave}\} \times 100 \qquad \dots (\text{Numerical Formula 4B})$$

Dielectric Property

The adhesive sheet was cut into pieces of 30 mm × 30 mm. The resultant cut pieces of the adhesive sheet were attached to a dielectric material test fixture 16453A (manufactured by Agilent Technologies, Inc.). The relative permittivity ($\varepsilon$'r) and the dielectric dissipation factor (tan$\delta$) of each of the resultant cut pieces of the adhesive sheet and the produced adherends were measured at 23 degrees C at 40.68 MHz frequency using an RF impedance material analyzer E4991A (manufactured by Agilent Technologies, Inc.) according to a parallel-plate method. The value of the dielectric property (tan$\delta$/$\varepsilon$'r) was calculated on the basis of the measurements.

Evaluation of High-Frequency-Dielectric-Heating Adhesive

The high-frequency-dielectric-heating adhesive (adhesive sheet) was evaluated as follows. Evaluation results are shown in Table 1.

Adhesiveness

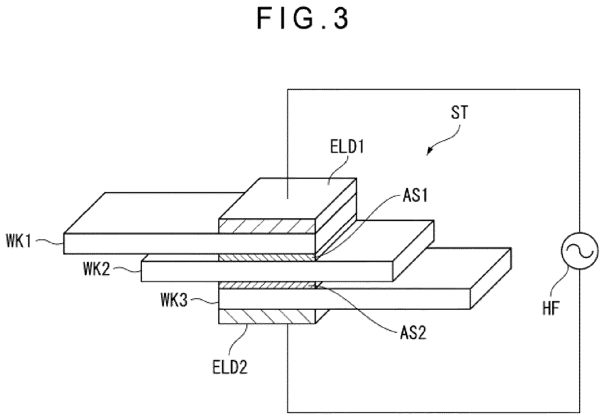

An assembly ST was produced by laminating three adherends WK1, WK2, WK3 as shown in Fig. 3. It should be noted that diagonal lines are drawn in a part of sections of the electrodes and the adhesive sheets in Fig. 3 in order to help distinguishing the electrodes from the adhesive sheets.

Initially, the produced high-frequency-dielectric-heating adhesives (adhesive sheets) were cut into pieces (length: 25 mm, width: 25 mm) to prepare two adhesive sheets AS1, AS2. Plate shaped adherends WK1, WK3 (length: 75 mm, width: 25 mm, thickness: 2 mm) and a plate-shaped adherend WK2 (length: 55 mm, width: 25 mm, thickness: 2 mm) were laminated. The adherends were the above-described glass fiber-polypropylene resin plates. The adhesive sheets AS1, AS2 were placed at the longitudinal ends of the adherends WK1, WK3 and at the longitudinal center of the adherend WK2 when the adherends WK1, WK2, WK3 were laminated. The adherends WK1, WK2, WK3 were all made of the same material. The laminated adherends and the adhesive sheets were fixed between electrodes ELD1, ELD2 of a high-frequency dielectric heating device (product name "YRP-400T-A" produced by YAMAMOTO VINITA CO., LTD.). Press surfaces of the electrodes ELD1, ELD2 were shaped in a square of 25 mm × 25 mm. As also shown in Fig. 3, the adhesive sheets AS1, AS2 and the electrodes ELD1, ELD2 were fixed to be mutually overlapped. With thus being fixed, the adhesive sheets and the adherends were bonded by applying a high-frequency electric field by a high-frequency power source HF connected to the electrodes ELD1, ELD2 under the high-frequency electric field application conditions below to produce an adhesiveness evaluation test piece (assembly ST). Pressing pressure at the time of applying the high-frequency electric field is a pressure applied at the bonding portions of the adherends.

High-Frequency Electric Field Application Conditions

Frequency : 40.68 MHz
Output: 250 W
Application time: 20 seconds
Pressing pressure: 0.16 MPa

The adhesiveness of the produced adhesiveness evaluation test piece was evaluated according to the following standards.

A: All of the three adherends showed a bonding strength of 1 MPa or more.

F: All of the three adherends showed a bonding strength of less than 1 MPa.

Tensile shear strengths (bonding force) (unit: MPa) were measured for the adhesiveness evaluation test pieces produced with the use of the high-frequency-dielectric-heating adhesives of Examples.

The tensile shear strength was measured using a universal tensile tester (product name "INSTRON 5581" produced by Instron Corporation). The tensile shear strength was measured at a tension rate of 10 mm/min. The tensile shear force was measured in accordance with JIS K6850 (1999) after holding the adherend WK1 and the adherend WK3 between chucks of the tester.

Evaluation on Offset of Adherends

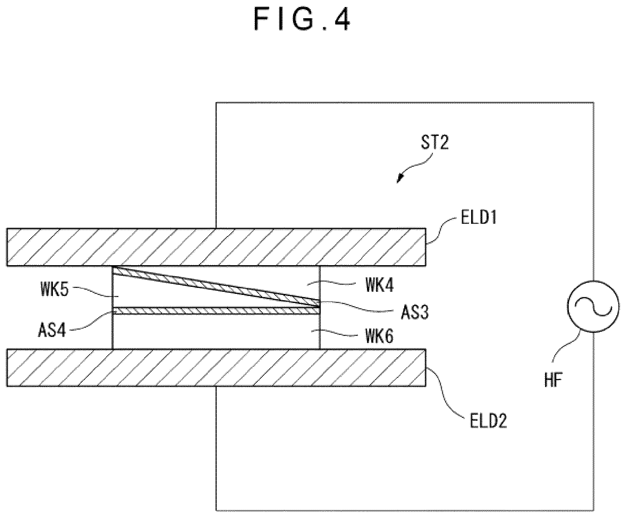

An assembly ST2 was produced by laminating three adherends WK4, WK5, WK6 as shown in Fig. 4. It should be noted that diagonal lines are drawn in a part of sections of the electrodes and the adhesive sheets in Fig. 4 as in Fig. 3 in order to help distinguishing the electrodes from the adhesive sheets.

Initially, the produced high-frequency-dielectric-heating adhesives (adhesive sheets) were cut into pieces (length: 12.5 mm, width: 25 mm) to prepare two adhesive sheets AS3, AS4. A plate-shaped adherend (length: 12.5 mm, width: 25 mm, thickness: 2 mm) were prepared to be used as an adherend WK6 (adherend A). A plate-shaped adherend (length: 12.5 mm, width: 25 mm, thickness: 2 mm) were prepared to be used as an adherend B. The adherend B was cut in half along a diagonal line of a rectangle defined by the above-described length and thickness as viewed in a side elevation to prepare an adherend WK4 and an adherend WK5. Each of the resultant half-cut adherend WK4 and adherend WK5 has a slant surface whose slant angle is approximately 9.1 degrees. The adherends A and B, which were made of the same material, were the above-described glass fiber-polypropylene resin plates.

Subsequently, the adherend WK6, the adhesive sheet AS4, the adherend WK5, the adhesive sheet AS3, and the adherend WK4 were layered and laminated in this order. When being laminated, longitudinal ends of each of the adherends WK4, WK5 and WK6 were aligned with longitudinal ends of each of the adhesive sheets AS3 and AS4. In addition, the adhesive sheet AS3 was layered on the slant surface of the adherend WK5 and the adherend WK4 was layered on the adhesive sheet AS3 so that the slant surface of the adherend WK4 faces the slant surface of the adherend WK5.

The laminated adherends and the adhesive sheets were fixed between electrodes ELD1, ELD2 of a high-frequency dielectric heating device (product name "YRP-400T-A" produced by YAMAMOTO VINITA CO., LTD.). Press surfaces of the electrodes ELD1, ELD2 were shaped in a square of 25 mm × 25 mm. As also shown in Fig. 4, the adhesive sheets AS3, AS4 and the electrodes ELD1, ELD2 were fixed to be mutually overlapped. With thus being fixed, the adhesive sheets and the adherends were bonded by applying a high-frequency electric field by a high-frequency power source HF connected to the electrodes ELD1, ELD2 under the high-frequency electric field application conditions below to produce an adhesiveness evaluation test piece (assembly ST2). Pressing pressure at the time of applying the high-frequency electric field is a pressure applied at the bonding portions of the adherends.

High-Frequency Electric Field Application Conditions

Frequency : 40.68 MHz
Output: 50 W
Application time: 20 seconds
Pressing pressure: 0.75 MPa

The offset of the adherends of the produced adhesiveness evaluation test piece was evaluated in accordance with the standards below. A total of a horizontal distance L1 from a first end surface E6A of the adherend WK6 to an end surface E5 of the adherend WK5 and a horizontal distance L2 from a second end surface E6B of the adherend WK6 to an end surface E4 of the adherend WK4 was represented by (L1 + L2).

A: (L1 + L2) was 2.0 mm or less.

F: (L1 + L2) was more than 2.0 mm.

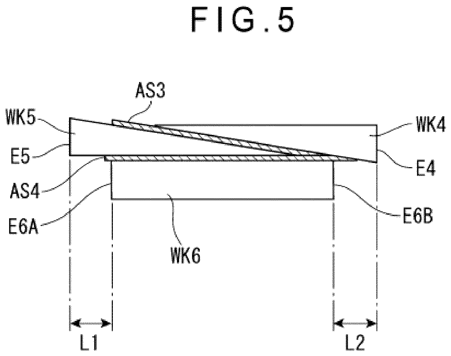

The horizontal distances L1 and L2 representing the offset between the adherends were measured as follows. As illustrated in Fig. 5, the horizontal distance L1 between the first end surface E6A of the adherend WK6 in the longitudinal direction and the end surface E5 of the adherend WK5 located near the first end surface E6A was measuredSimilarly, the horizontal distance L2 between the second end surface E6B of the adherend WK6 in the longitudinal direction and the end surface E4 of the adherend WK4 located near the second end surface E6B was measured

Table 1

| Item | Composition of Adhesive | | | | | Physical Properties of Adhesive | | | | | | | | High-Frequency Bondability | |
|---|---|---|---|---|---|---|---|---|---|---|---|---|---|---|---|
| | Thermoplastic Resin (A) | | | Dielectric Filler (B) | | Softening Temperature (TM) | Thermal Decomposition Temperature (TD) | MVR | | Thickness | Thickness Accuracy | Flow Start Temperature (TF1) | Dielectric Property (DPI) (tan$\delta$/$\varepsilon$'r) | Offset of Adherend | Adhesiveness |
| | Type | MFR | Composition Ratio | Type | Composition Ratio | | | Softening Temperature +10°C (TL) | Thermal Decomposition Temperature -10°C(TU) | | | | | | |
| | | [g/10min] | [Vol%] | | [Vol%] | [°C] | [°C] | [cm$^3$/10min] | [cm$^3$/10min] | [mm] | [%] | [°C] | [-] | | |
| Ex. 1 | LDPE-1 | 3.5 | 80 | Zinc Oxide | 20 | 112 | 236 | 4.2 | 4.1 | 400 | ±4 | 121 | 0.011 | A | A |
| Ex. 2 | LDPE-2 | 7.0 | 80 | Zinc Oxide | 20 | 111 | 232 | 7.0 | 5.3 | 400 | ±3 | 118 | 0.011 | A | A |
| Ex. 3 | LDPE-3 | 20 | 80 | Zinc Oxide | 20 | 111 | 235 | 15.3 | 11.8 | 400 | ±3 | 117 | 0.010 | A | A |
| Ex. 4 | LDPE-3 | 20 | 70 | Zinc Oxide | 30 | 110 | 234 | 10.3 | 8.0 | 400 | ±3 | 118 | 0.011 | A | A |
| Ex. 5 | LDPE-4 | 75 | 80 | Zinc Oxide | 20 | 110 | 236 | 56.0 | 174.4 | 400 | ±3 | 116 | 0.011 | A | A |
| Ex. 6 | EVA-1 | 3.5 | 80 | Zinc Oxide | 20 | 96 | 229 | 5.2 | 7.9 | 400 | ±4 | 116 | 0.013 | A | A |
| Comp. 1 | EVA-2 | 2500 | 80 | Zinc Oxide | 20 | 78 | 225 | 1880.4 | 5815.3 | 400 | ±3 | 111 | 0.013 | F | A |
| Comp. 2 | LDPE-5 | 0.3 | 80 | Zinc Oxide | 20 | 121 | 231 | 0.8 | 0.1 | 400 | ±5 | 163 | 0.011 | A | F |
| Comp. 3 | EVA-3 | 400 | 80 | Zinc Oxide | 20 | 70 | 224 | 312.1 | 927.2 | 400 | ±3 | 110 | 0.012 | F | A |

The high-frequency-dielectric-heating adhesives according to Examples 1 to 6 can bond the three adherends in a single process within a short time and can restrain the offset between the adherends. The three adherends of the assembly produced with the use of the high-frequency-dielectric-heating adhesives according to Examples 1 to 6 were bonded to show a bonding strength of 1 MPa or more with small offset between the adherends.

In Comparatives 1 and 3, the high-frequency-dielectric-heating adhesive, whose MVR exceeded 300 cm$^3$/10 min, exhibited excessively large fluidity during the dielectric heating bonding. It is believed that this is the reason why the offset between the adherends was caused when the adherends were bonded with the use of the adhesives of Comparatives 1 and 3.

In Comparative 2, the high-frequency-dielectric-heating adhesive, whose MVR was less than 1 cm$^3$/10 min, exhibited excessively low fluidity during the dielectric heating bonding. It is believed that anchoring effect was thus not easily exhibited, wettability with the adherends was low, and the adhesiveness was low after a short-time process.

As described above, the adherend in a form of the glass fiber-polypropylene resin plate had the flow start temperature TF2 of 183 degrees C and the dielectric property DP2 of 0.000. Accordingly, the difference between the flow start temperatures (TF2 - TF1) is equal to a difference between the flow start temperature TF2 of the adherend and the flow start temperature TF1 of the high-frequency-dielectric-heating adhesive in each of the examples. For instance, in Example 1, the difference (TF2 - TF1) between the flow start temperature TF2 and the flow start temperature TF1 (121 degrees C as shown in Table 1) of the high-frequency-dielectric-heating adhesive is 62 degrees C. Further, the difference between the dielectric properties (DP1 - DP2) is, as a result, the same as the value of the dielectric property of the high-frequency-dielectric-heating adhesive.

EXPLANATION OF CODES

1... assembly, 11...first high-frequency-dielectric-heating adhesive, 12...second high-frequency-dielectric-heating adhesive, 50...dielectric heating device, 51 ...first high-frequency electric field application electrode, 52...second high-frequency electric field application electrode, 53...high-frequency power source, 110... first adherend, 120...second adherend, 130...third adherend, AS1...adhesive sheet, AS2...adhesive sheet, AS3...adhesive sheet, AS4...adhesive sheet, ELD1...electrode, ELD2...electrode, ST, ST2... assembly, WK1...adherend, WK2...adherend, WK3...adherend, WK4... adherend, WK5...adherend, WK6...adherend, E4, E5...end surface, E6A... first end surface, E6B...second end surface, L1, L2...horizontal distance

**Claims**

1. A high-frequency-dielectric-heating adhesive configured to bond three or more adherends to each other, the high-frequency-dielectric-heating adhesive comprising:

   a thermoplastic resin; and
   a dielectric filler configured to generate heat upon application of a high-frequency electric field, wherein
   a melt volume rate of the high-frequency-dielectric-heating adhesive at each of a lower-limit temperature TL and an upper-limit temperature TU is in a range from 1 to 300 cm$^3$/10 min,
   the lower-limit temperature TL (unit: degrees C) is defined by a numerical formula (Numerical Formula 11) below, and
   the upper-limit temperature TU (unit: degrees C) is defined by a numerical formula (Numerical Formula 12) below,

   $$TL = \text{(softening temperature TM of the high-frequency-dielectric-heating adhesive)} + 10 \text{ degrees C} \quad \dots \text{(Numerical Formula 11)}$$

   $$TU = \text{(thermal decomposition temperature TD of the high-frequency-dielectric-heating adhesive)} - 10 \text{ degrees C} \quad \dots \text{(Numerical Formula 12)}$$

   where a measurement load in measuring the melt volume rate at the lower-limit temperature TL is 20 kg, and a measurement load in measuring the melt volume rate at the upper-limit temperature TU is 5 kg.

2. The high-frequency-dielectric-heating adhesive according to claim 1, wherein the three or more adherends each have a flow start temperature or no flow start temperature, a flow start temperature TF2 (degrees C) of each of the adherends and a flow start temperature TF1 (degrees C) of the high-frequency-dielectric-heating adhesive satisfy a relationship of a numerical formula (Numerical Formula 2) below,

$$-5 \leq TF2 - TF1 \qquad \ldots (\text{Numerical Formula 2}).$$

3. The high-frequency-dielectric-heating adhesive according to claim 2, wherein the flow start temperature TF1 of the high-frequency-dielectric-heating adhesive is in a range from 80 degrees C to 200 degrees C.

4. The high-frequency-dielectric-heating adhesive according to claim 2 or 3, wherein, when at least one of the three or more adherends is an adherend having the flow start temperature, the flow start temperature TF2 of the at least one of the three or more adherends having the flow start temperature is 90 degrees C or more.

5. The high-frequency-dielectric-heating adhesive according to any one of claims 1 to 4, wherein a dielectric property DP1 of the high-frequency-dielectric-heating adhesive and a dielectric property DP2 of each of the three or more adherends satisfy a relationship of a numerical formula (Numerical Formula 1) below,

$$0 < DP1 - DP2 \qquad \ldots (\text{Numerical Formula 1})$$

where the dielectric property DP1 and the dielectric property DP2 are values of dielectric properties ($\tan\delta/\varepsilon'r$) of the high-frequency-dielectric-heating adhesive and the three or more adherends, respectively,

$\tan\delta$ is a dielectric dissipation factor at 23 degrees C at a frequency of 40.68 MHz, and
$\varepsilon'r$ is a relative permittivity at 23 degrees C at a frequency of 40.68 MHz.

6. The high-frequency-dielectric-heating adhesive according to claim 5, wherein the dielectric property DP2 of all of the three or more adherends is 0.015 or less.

7. The high-frequency-dielectric-heating adhesive according to claim 5 or 6, wherein the dielectric property DP1 of the high-frequency-dielectric-heating adhesive is 0.005 or more.

8. The high-frequency-dielectric-heating adhesive according to any one of claims 1 to 7, wherein the high-frequency-dielectric-heating adhesive is in a form of an adhesive sheet.

9. The high-frequency-dielectric-heating adhesive according to claim 8, wherein a thickness TS1 of the adhesive sheet and a thickness TS2 of each of the three or more adherends satisfy a relationship of a numerical formula (Numerical Formula 3) below,

$$TS1 < TS2 \qquad \ldots (\text{Numerical Formula 3}).$$

10. The high-frequency-dielectric-heating adhesive according to claim 8 or 9, wherein a thickness TS1 of the adhesive sheet is in a range from 5 $\mu$m to 2000 $\mu$m.

11. The high-frequency-dielectric-heating adhesive according to any one of claims 8 to 10, wherein a thickness accuracy of the adhesive sheet is within $\pm 10\%$.

12. An assembly comprising: the high-frequency-dielectric-heating adhesive according to any one of claims 1 to 11; and the three or more adherends bonded by the high-frequency-dielectric-heating adhesive.

13. A manufacturing method of an assembly, the method comprising:

placing the high-frequency-dielectric-heating adhesive according to any one of claims 1 to 11 between corresponding ones of the three or more adherends; and
applying a high-frequency electric field to the high-frequency-dielectric-heating adhesive to bond the three or more adherends to each other.

14. The manufacturing method of an assembly according to claim 13, wherein the three or more adherends and the high-frequency-dielectric-heating adhesive are placed in between electrodes of a dielectric heating device, and the high-frequency electric field is applied while the three or more adherends and the high-frequency-dielectric-heating adhesive are pressed by the electrodes.

FIG.1

# FIG.2

# FIG.3

# FIG.4

# FIG.5

## INTERNATIONAL SEARCH REPORT

| International application No. |
| --- |
| **PCT/JP2021/043772** |

**A. CLASSIFICATION OF SUBJECT MATTER**

*B32B 27/00*(2006.01)i; *B32B 27/18*(2006.01)i; *C09J 5/06*(2006.01)i; *C09J 11/04*(2006.01)i; *C09J 201/00*(2006.01)i; *C09J 7/10*(2018.01)i; *C09J 7/30*(2018.01)i; *C09J 7/35*(2018.01)i; *H05B 6/54*(2006.01)i; *B32B 7/027*(2019.01)i
FI: C09J201/00; H05B6/54; C09J11/04; C09J7/30; C09J7/10; C09J5/06; C09J7/35; B32B27/18 Z; B32B27/00 D; B32B7/027

According to International Patent Classification (IPC) or to both national classification and IPC

**B. FIELDS SEARCHED**

Minimum documentation searched (classification system followed by classification symbols)

B32B27/00; B32B27/18; C09J5/06; C09J11/04; C09J201/00; C09J7/10; C09J7/30; C09J7/35; H05B6/54; B32B7/027

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN); Japio-GPG/FX

**C. DOCUMENTS CONSIDERED TO BE RELEVANT**

| Category* | Citation of document, with indication, where appropriate, of the relevant passages | Relevant to claim No. |
| --- | --- | --- |
| X | WO 2020/203206 A1 (LINTEC CORP) 08 October 2020 (2020-10-08) paragraphs [0028]-[0066], [0094], [0103]-[0118], fig. 1-4 | 1-14 |
| Y | | 1-14 |
| Y | WO 2018/079354 A1 (LINTEC CORP) 03 May 2018 (2018-05-03) paragraphs [0042]-[0060], fig. 5 | 1-14 |
| A | JP 2010-6908 A (DENSO CORP) 14 January 2010 (2010-01-14) examples | 1-14 |
| A | JP 2020-70365 A (LINTEC CORP) 07 May 2020 (2020-05-07) examples | 1-14 |
| A | JP 2018-177825 A (LINTEC CORP) 15 November 2018 (2018-11-15) examples | 1-14 |
| A | JP 2014-213524 A (NIPPON ELECTRIC GLASS CO) 17 November 2014 (2014-11-17) examples | 1-14 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **31 January 2022** | **15 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
|---|
| **PCT/JP2021/043772** |

**C.     DOCUMENTS CONSIDERED TO BE RELEVANT**

| Category* | Citation of document, with indication, where appropriate, of the relevant passages | Relevant to claim No. |
|---|---|---|
| P, A | WO 2021/200686 A1 (LINTEC CORP) 07 October 2021 (2021-10-07) examples | 1-14 |

Form PCT/ISA/210 (second sheet) (January 2015)

**INTERNATIONAL SEARCH REPORT**
Information on patent family members

International application No.

**PCT/JP2021/043772**

| Patent document cited in search report | | | Publication date (day/month/year) | Patent family member(s) | | | Publication date (day/month/year) |
|---|---|---|---|---|---|---|---|
| WO | 2020/203206 | A1 | 08 October 2020 | (Family: none) | | | |
| WO | 2018/079354 | A1 | 03 May 2018 | JP | 2019-94503 | A | |
| | | | | US | 2020/0063001 | A1 | |
| | | | | paragraphs [0138]-[0169], fig. 5 | | | |
| | | | | US | 2019/0283334 | A1 | |
| | | | | US | 2019/0329504 | A1 | |
| | | | | US | 2019/0352546 | A1 | |
| | | | | US | 2020/0010730 | A1 | |
| | | | | WO | 2018/079355 | A1 | |
| | | | | WO | 2018/079356 | A1 | |
| | | | | WO | 2018/147351 | A1 | |
| | | | | WO | 2018/147352 | A1 | |
| | | | | EP | 3533847 | A1 | |
| | | | | EP | 3533848 | A1 | |
| | | | | EP | 3533849 | A1 | |
| | | | | KR | 10-2019-0075935 | A | |
| | | | | CN | 109890923 | A | |
| | | | | CN | 109890925 | A | |
| | | | | TW | 201840776 | A | |
| | | | | TW | 201843266 | A | |
| | | | | CN | 110291166 | A | |
| | | | | CN | 110300782 | A | |
| | | | | CN | 109923184 | A | |
| JP | 2010-6908 | A | 14 January 2010 | (Family: none) | | | |
| JP | 2020-70365 | A | 07 May 2020 | (Family: none) | | | |
| JP | 2018-177825 | A | 15 November 2018 | (Family: none) | | | |
| JP | 2014-213524 | A | 17 November 2014 | (Family: none) | | | |
| WO | 2021/200686 | A1 | 07 October 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003252658 A
- JP 11187626 A